# FASCICULE DE BREVET EUROPEEN

(11) **EP 3 730 767 B1**
(45) Date de publication et mention de la délivrance du brevet: **16.03.2022**
(21) Numéro de dépôt: 20165077.7
(22) Date de dépôt: 24.03.2020
(51) Int. Cl.: F02C 7/28, F02K 1/72

(54) **PORTE D'INVERSEUR DE POUSSÉE ÉQUIPÉE D'UN JOINT SAILLANT ET ENSEMBLE PROPULSIF D'AÉRONEF COMPRENANT LADITE PORTE**
SCHUBUMKEHRKLAPPE, DIE MIT EINER VORSTEHENDEN DICHTUNG AUSGESTATTET IST, UND LUFTFAHRZEUG-ANTRIEBSEINHEIT, DIE EINE SOLCHE KLAPPE UMFASST
THRUST REVERSER DOOR PROVIDED WITH A PROTRUDING SEAL AND AIRCRAFT PROPULSION ASSEMBLY INCLUDING SAID DOOR

(30) Priorité: 26.04.2019 FR 1904435
(43) Date de publication de la demande: 28.10.2020
(73) Titulaire: Airbus Operations SAS, 31060 Toulouse (FR)
(72) Inventeur: CHELIN, Frédéric, 31060 TOULOUSE (FR); CLAIRET, Guillaume, 31060 TOULOUSE (FR); GALINDO FERNANDEZ, Gabriel, 31060 TOULOUSE (FR)
(74) Mandataire: Fantin, Laurent

(56) Documents cités:
- EP-A1- 3 290 195
- GB-A- 2 395 175
- US-A- 5 243 817
- US-A1- 2008 271 432

## Description

La présente demande se rapporte à une porte d'inverseur de poussée équipée d'un joint saillant ainsi qu'à un ensemble propulsif comprenant ladite porte.

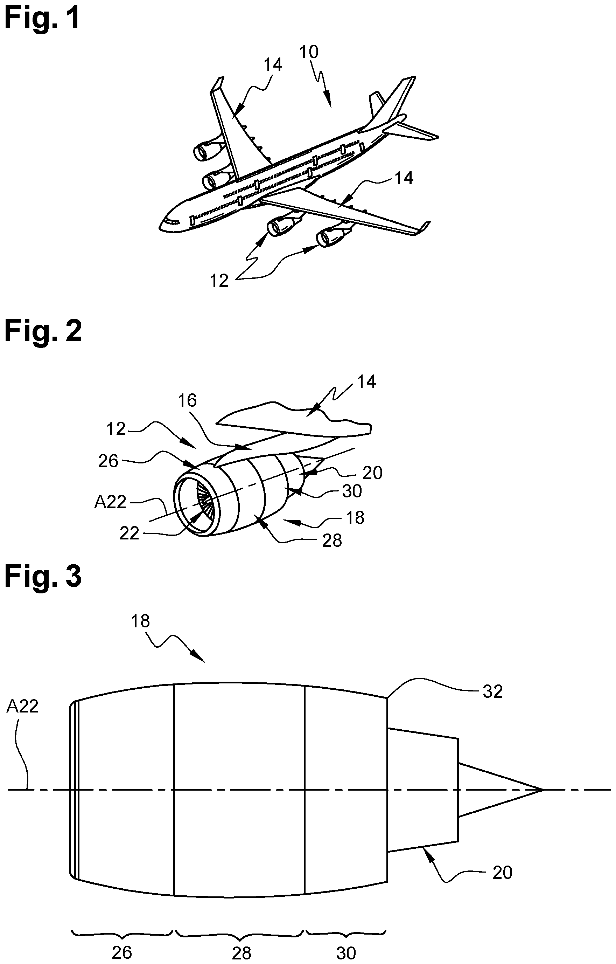

Selon un mode de réalisation visible sur les figures 1 à 6, un aéronef 10 comprend plusieurs ensembles propulsifs 12 positionnés sous chacune des ailes 14 de l'aéronef 10 et reliés à ces dernières par des mâts 16. Chaque ensemble propulsif 12 comprend un turboréacteur positionné à l'intérieur d'une nacelle 18. Le turboréacteur est relié au mât 16 par des attaches-moteurs et comprend un réacteur 20 et une soufflante 22.

Pour la suite de la description, une direction longitudinale est parallèle à l'axe de rotation A22 de la soufflante 22 et une direction radiale est perpendiculaire à l'axe de rotation A22. Un plan longitudinal est un plan contenant l'axe de rotation A22 et un plan transversal est un plan perpendiculaire à l'axe de rotation A22. Les notions avant/amont et arrière/aval font référence au sens d'écoulement d'un flux d'air dans la nacelle 18, ce dernier s'écoulant d'avant (de l'amont) vers l'arrière (l'aval).

La nacelle 18 a une forme approximativement tubulaire et délimite avec le réacteur 20 un conduit annulaire 24. La nacelle 18 comprend une section amont 26, appelée entrée d'air et positionnée à l'avant de la soufflante 22, une section médiane 28 dans laquelle est positionnée la soufflante 22 et une section aval 30 qui présente un bord de fuite 32.

La nacelle 18 comprend un inverseur de poussée 34 positionné au niveau de la section aval 30 et configuré pour occuper un état activé dans lequel il dévie au moins une partie du flux d'air circulant dans le conduit annulaire 24 vers l'extérieur et l'avant de la nacelle 18 ainsi qu'un état inactivé dans lequel il ne dévie pas le flux d'air circulant dans le conduit annulaire 24.

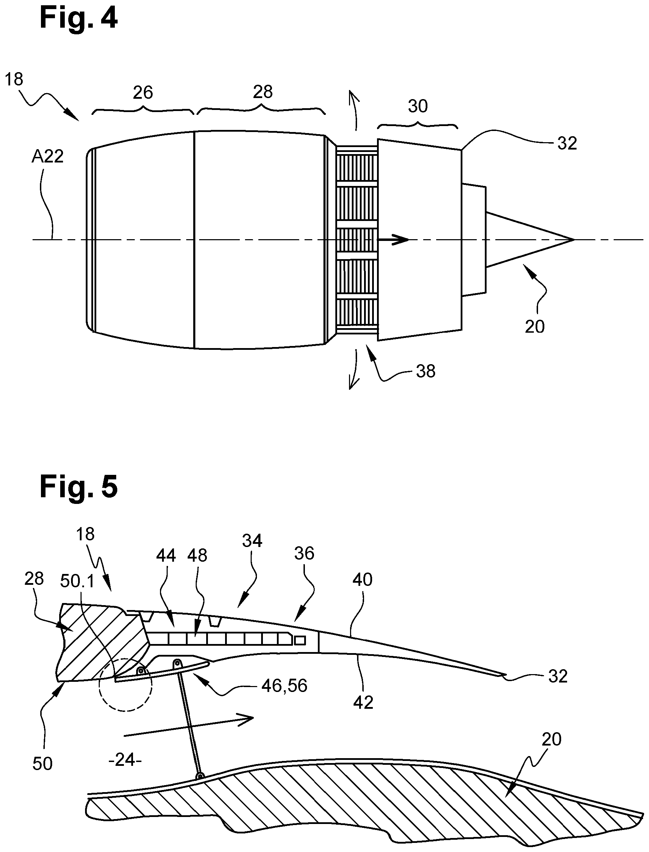

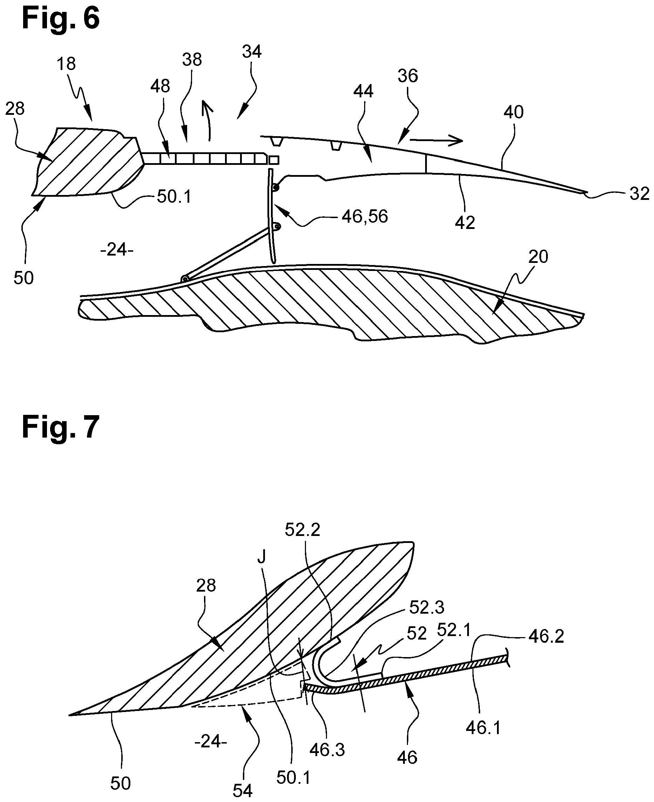

L'inverseur de poussée 34 comprend au moins une partie mobile 36 permettant de générer au moins une ouverture latérale 38 (visible sur les figures 4 et 6) vers laquelle est orienté le flux d'air dévié.

Selon un mode de réalisation, la partie mobile 36 est un capot tubulaire en O qui se translate selon la direction longitudinale entre une position fermée (visible sur les figures 3 et 5) dans laquelle la partie mobile 36 est en contact avec la section médiane 28 lorsque l'inverseur de poussée 34 est à l'état inactivé et une position ouverte (visible sur les figures 4 et 6) dans laquelle la partie mobile 36 est écartée de la section médiane 28 de manière à générer la (ou les) ouverture(s) latérale(s) 38 lorsque l'inverseur de poussée est à l'état activé. La partie mobile 36 comprend une paroi extérieure 40 et une paroi intérieure 42 reliées au niveau du bord de fuite 32, les parois intérieure et extérieure 40, 42 délimitant entre elles une cavité 44 ouverte en direction de la section médiane 28.

L'inverseur de poussée 34 comprend également des portes 46 configurées pour dévier au moins une partie du flux d'air circulant dans le conduit annulaire 24 en direction d'une ouverture latérale 38 ainsi qu'une pluralité de cascades 48 positionnées au niveau de l'ouverture latérale 38 lorsque la partie mobile 36 est en position ouverte et dans la cavité 44 lorsque la partie mobile 36 est en position fermée. Ces cascades 48 sont réparties sur la circonférence de la nacelle 18 et sont configurées pour contrôler l'orientation du flux dévié par la (ou les) porte(s) 46.

Chaque porte 46 est mobile entre une position rabattue, visible sur la figure 5, lorsque l'inverseur de poussée est à l'état inactivé et que la partie mobile 36 est en position fermée, dans laquelle la porte 46 est plaquée contre la partie mobile 36 et une position déployée, visible sur la figure 6, lorsque l'inverseur de poussée est à l'état activé et que la partie mobile 36 est en position ouverte, dans laquelle la porte 46 s'étend en travers du conduit annulaire 24 pour dévier au moins une partie du flux d'air y circulant en direction de l'ouverture latérale 38.

Comme illustré sur les figures 5 et 7, la section médiane 28 comprend une paroi intérieure 50 qui délimite le conduit annulaire 24 et qui présente un bord arrière 50.1 présentant une double courbure, une première courbure dans un plan transversal et une deuxième courbure dans un plan longitudinal (comme illustré sur les figures 5 à 7). Ce bord arrière 50.1 est configuré pour orienter le flux d'air dévié par la (ou les) porte(s) 46 en direction des cascades 48.

Chaque porte 46 assure une certaine continuité entre la paroi intérieure 50 de la section médiane 28 et la paroi intérieure 42 de la partie mobile 36 lorsque la porte 46 est en position rabattue. Cette porte 46 comprend une première face 46.1 orientée vers l'avant lorsque la porte 46 est en position déployée et vers le réacteur 20 lorsqu'elle est en position rabattue ainsi qu'une deuxième face 46.2 orientée vers l'arrière lorsque la porte 46 est en position déployée et vers la partie mobile 36 lorsqu'elle est en position rabattue. La porte 46 comprend également un premier bord 46.3 orienté vers l'avant en position rabattue et vers la partie mobile 36 en position déployée.

Compte tenu de la cinématique de la porte 46 entre les positions rabattue et déployée, afin de limiter les risques de frottements entre la porte 46 et le bord arrière 50.1 de la section médiane 28, le premier bord 46.3 de la porte et le bord arrière 50.1 de la section médiane 28 sont espacés d'un jeu J, selon une direction radiale, lorsque la porte 46 est en position rabattue, comme illustré sur la figure 7. Pour réduire le jeu J, le premier bord 46.3 de la porte 46 est légèrement recourbé vers l'extérieur de la nacelle 18.

Pour éviter que le flux d'air ne passe entre la porte 46 et la partie mobile 36, la porte 46 comprend un joint 52, en élastomère, positionné contre la deuxième face 46.2 au niveau du premier bord 46.3. Dans un plan transversal, ce joint 52 présente une section en U et comprend une première branche 52.1 plaquée et fixée contre la deuxième face 46.2 de la porte 46, une deuxième branche 52.2 en contact avec le bord arrière 50.1 de la section médiane 28 lorsque la porte 46 est en position rabattue et une base 52.3 orientée vers l'avant, en retrait vers l'arrière par rapport au premier bord 46.3 de la porte.

Cette configuration du premier bord 46.3 de la porte et du joint 52 génère une forme en creux 54 (délimitée par des pointillés sur la figure 7) qui s'étend sur toute la circonférence du conduit annulaire 24 et qui produit des perturbations aérodynamiques impactant la consommation en carburant de l'aéronef.

Selon un mode de réalisation décrit dans le document GB2395175, une porte d'un inverseur de poussée comprend, au niveau de son bord avant, un élément prolongeant vers l'avant la porte. Cet élément comprend une première zone reliée à la porte et une deuxième zone en contact avec le bord arrière de la paroi intérieure de la nacelle lorsque la porte est dans la position rabattue. Même si cette solution permet de supprimer la forme en creux, elle n'est pas pleinement satisfaisante car le joint doit avoir une longueur réduite (dimension prise selon la direction longitudinale). Par conséquent, le bord avant de la porte doit être très proche du bord arrière de la paroi intérieure de la nacelle ce qui impose des formes particulières pour la porte et la paroi intérieure et/ou des cinématiques particulières pour la porte.

La présente invention vise à remédier à tout ou partie des inconvénients de l'art antérieur. A cet effet, l'invention a pour objet une porte d'inverseur de poussée d'un ensemble propulsif d'aéronef, ladite porte étant mobile entre une position rabattue dans laquelle la porte ne dévie pas un flux d'air et une position déployée dans laquelle la porte dévie un flux d'air, ladite porte présentant une première face en contact avec le flux d'air en fonctionnement, une deuxième face opposée à la première face ainsi qu'un premier bord, configuré pour être orienté, en fonctionnement, vers une partie fixe lorsque la porte est en position rabattue, ladite porte comportant un joint positionné au niveau du premier bord présentant une zone de liaison reliée à la porte ainsi qu'une partie saillante décalée vers l'avant par rapport au premier bord lorsque la porte est en position rabattue, la partie saillante prolongeant la première face de la porte.

Selon l'invention, le joint comprend une âme rigide pour rigidifier la partie saillante qui s'étend au-delà du premier bord de la porte .

La partie saillante du joint permet de limiter les perturbations aérodynamiques. En complément, l'âme rigide permet de raidir la partie saillante du joint si bien que le premier bord de la porte peut être plus espacé de la partie fixe par rapport aux solutions de l'art antérieur.

Selon une autre caractéristique, l'âme rigide comprend une première zone positionnée dans la partie saillante du joint ainsi qu'une deuxième zone positionnée dans la zone de liaison du joint.

Selon une autre caractéristique, l'âme rigide présente une longueur ainsi qu'au moins une caractéristique non constante sur sa longueur.

Selon une autre caractéristique, l'âme rigide comprend au moins une entaille qui s'étend à partir d'un bord amont de l'âme rigide.

Selon une autre caractéristique, les entailles présentent des dimensions qui sont ajustées pour faire varier la caractéristique non constante de l'âme rigide.

Selon une autre caractéristique, l'âme rigide présente des dimensions qui sont ajustées pour faire varier la caractéristique non constante de l'âme rigide.

Selon une autre caractéristique, le joint a une section en V avec une pointe, ladite section en V étant formée par des première et deuxième branches qui présentent une zone de jonction décalée vers l'amont par rapport au premier bord lorsque la porte est en position rabattue.

Selon une autre caractéristique, la première branche comprend une première portion sensiblement rectiligne plaquée contre la deuxième face de la porte, une deuxième portion sensiblement rectiligne dans le prolongement de la porte et une troisième portion courbe, intercalée entre la deuxième portion et la pointe de la section en V.

Selon une autre caractéristique, l'âme rigide ne s'étend pas au niveau de la deuxième branche et de la troisième portion courbe de la première branche.

Selon une autre caractéristique, la première branche présente un décrochement pour loger une partie de la porte afin qu'une première face de la première branche soit dans le prolongement de la première face de la porte.

Selon une autre caractéristique, le joint est en élastomère et surmoulé sur l'âme rigide. L'invention a également pour objet un ensemble propulsif comprenant une porte d'inverseur de poussée selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue en perspective d'un ensemble propulsif,
- La figure 3 est une vue latérale d'un ensemble propulsif équipé d'un inverseur de poussée à l'état inactivé,
- La figure 4 est une vue latérale de l'ensemble propulsif visible sur la figure 3, l'inverseur de poussée étant à l'état activé,
- La figure 5 est une coupe longitudinale d'une partie de l'ensemble propulsif visible sur la figure 3, l'inverseur de poussée étant à l'état inactivé,
- La figure 6 est une coupe longitudinale d'une partie de l'ensemble propulsif visible sur la figure 3, l'inverseur de poussée étant à l'état activé,
- La figure 7 est une coupe longitudinale d'une partie d'une porte de l'inverseur de poussée visible sur la figure 5 qui illustre un mode de réalisation de l'art antérieur,
- La figure 8 est une vue de face d'une partie d'une porte de l'inverseur de poussée visible sur la figure 5 qui illustre un mode de réalisation de l'invention,
- La figure 9 est une coupe longitudinale d'une partie d'une porte de l'inverseur de poussée visible sur la figure 5 qui illustre un mode de réalisation de l'invention,
- La figure 10 est une coupe d'un joint d'une porte d'inverseur de poussée qui illustre un mode de réalisation de l'invention,
- La figure 11 est une vue arrière d'un ensemble propulsif d'un aéronef,
- La figure 12 est une vue en perspective de deux portes d'un inverseur de poussée et de deux âmes rigides illustrant un mode de réalisation,
- La figure 13 est une vue en perspective d'une âme rigide illustrant un mode de réalisation de l'invention,
- La figure 14 est une vue de dessus d'une âme rigide illustrant un mode de réalisation de l'invention, et
- La figure 15 est une coupe d'un joint d'une porte d'inverseur de poussée illustrant un autre mode de réalisation de l'invention.

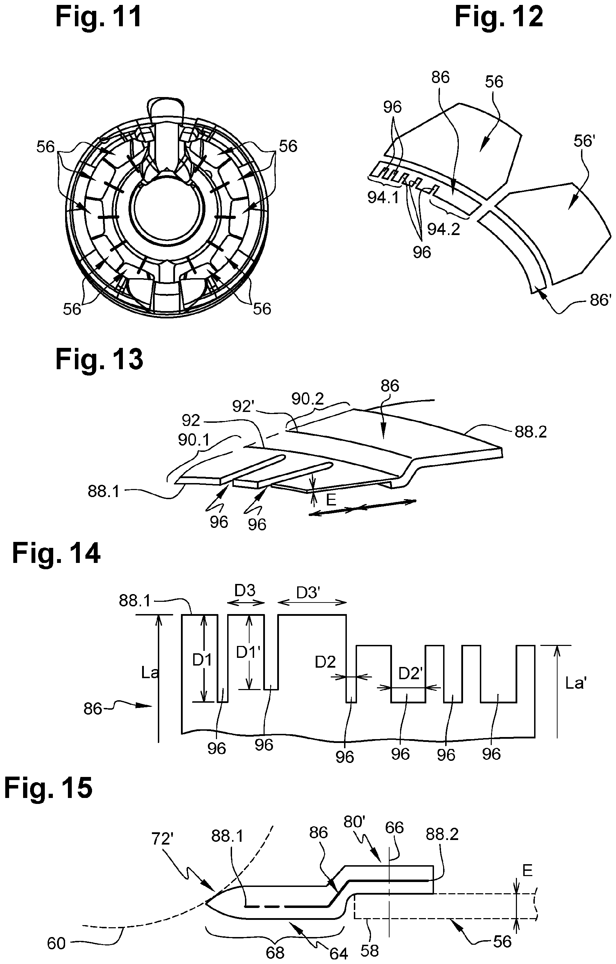

Sur la figure 11, on a représenté plusieurs portes 56 d'un inverseur de poussée d'un ensemble propulsif d'un aéronef qui sont réparties sur la circonférence de l'ensemble propulsif. Selon une configuration visible sur la figure 12, les portes peuvent être différentes les unes des autres en fonction de leurs positions sur la circonférence de l'ensemble propulsif.

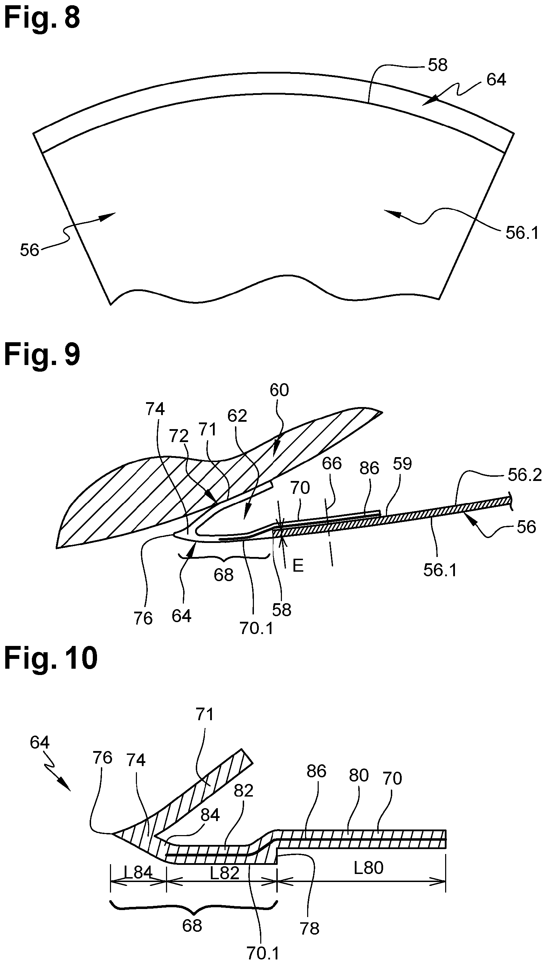

Sur les figures 8 et 9, on a représenté une partie d'une porte 56 d'un inverseur de poussée d'un ensemble propulsif. Les autres éléments de l'ensemble propulsif ne sont pas décrits car ils peuvent être identiques à ceux de l'art antérieur.

La porte 56 comprend une première face 56.1 orientée vers l'avant lorsque la porte 56 est en position déployée et vers le réacteur 20 lorsqu'elle est en position rabattue ainsi qu'une deuxième face 56.2, opposée à la première face 56.1, orientée vers l'arrière lorsque la porte 56 est en position déployée et vers la partie mobile de l'inverseur de poussée lorsqu'elle est en position rabattue. En fonctionnement, la première face 56.1 est en contact avec un flux d'air.

La porte 46 comprend également un premier bord 58 orienté vers l'avant lorsqu'elle est en position rabattue et vers la partie mobile lorsqu'elle est en position déployée.

Selon un mode de réalisation, la porte 56 se présente sous la forme d'une plaque 59 ayant une épaisseur E au niveau du premier bord 58.

Lorsque la porte 56 est en position rabattue, le premier bord 58 est faiblement espacé d'une partie fixe 60 qui présente une double courbure, une première courbure dans un plan transversal et une deuxième courbure dans un plan longitudinal (comme illustré sur la figure 9). Cette partie fixe 60 correspond au bord arrière de la section médiane de l'ensemble propulsif et elle est configurée pour orienter le flux d'air dévié par la porte 56 en direction des cascades.

Compte tenu de la cinématique de la porte 56 entre les positions rabattue et déployée, afin de limiter les risques de frottements entre la porte 56 et la partie fixe 60, le premier bord 58 de la porte 56 et la partie fixe 60 sont espacés d'un jeu J, selon une direction radiale, lorsque la porte est en position rabattue comme illustré sur la figure 9, et délimitent une forme en creux 62 périphérique en amont de la porte 56.

La porte 56 comprend un joint 64 positionné au niveau du premier bord 58 et relié à la porte 56 par des éléments de fixation 66. Selon une configuration visible sur la figure 8, le joint 64 s'étend sur toute la longueur du premier bord 58 de la porte 56.

Le joint 64 comprend une partie saillante 68 décalée vers l'avant par rapport au premier bord 58 lorsque la porte 56 est en position rabattue, prolongeant la première face 56.1 de la porte 56, cette partie saillante 68 étant configurée de manière à combler au moins partiellement la forme en creux 62 délimitée par la partie fixe 60 et la porte 56. Ainsi, la partie saillante 68 permet de limiter les perturbations aérodynamiques générées par la forme en creux 62 en l'absence de joint 64. Lorsque la porte 56 est en position déployée, le joint 64 diminue le jeu entre la porte 56 et les cascades.

Selon un mode de réalisation visible sur les figures 9 et 10, le joint 64 a une section en forme de V comportant une première branche 70, plaquée et fixée contre la deuxième face 56.2 de la porte 56 ainsi qu'une deuxième branche 71 qui forme une zone de contact 72 en contact avec la partie fixe 60 lorsque la porte 56 est en position rabattue. Les première et deuxième branches 70, 71 présentent une zone de jonction 74 décalée vers l'avant par rapport au premier bord 58 lorsque la porte 56 est en position rabattue.

La partie saillante 68 de la section en V présente une pointe 76.

La première branche 70 présente un décrochement 78 configuré pour loger une partie de la porte 56, plus précisément la plaque 59 de la porte 56. Ainsi, la première branche 70 comprend une face extérieure 70.1 dans le prolongement de la première face 56.1 de la porte 56. Cette configuration permet de limiter les perturbations aérodynamiques.

Selon une configuration, au niveau de la partie saillante 68, la première branche 70 comprend une première portion 80 sensiblement rectiligne plaquée contre la deuxième face 56.2 de la porte 56, une deuxième portion 82 sensiblement rectiligne dans le prolongement de la porte 56 et une troisième portion 84 courbe, intercalée entre la deuxième portion 82 et la pointe 76 de la section en V, qui présente une courbure orientée vers l'extérieur de la nacelle 18. Cette configuration permet de limiter les risques de fuite entre le joint 64 et la partie fixe 60.

Pour donner un ordre de grandeur, la première portion 80 présente une largeur L80, sensiblement égale à la somme des largeurs L82, L84 des deuxième et troisième portions 82, 84, et la deuxième portion 82 présente une largeur L82 sensiblement égale à deux fois la largeur L84 de la troisième portion 84.

L'invention n'est pas limitée à une section en V pour le joint 64.

Selon un autre mode de réalisation visible sur la figure 15, le joint 64 est approximativement plat et comprend une zone de liaison 80' superposée et reliée à la porte 56 et une partie saillante 68 qui présente une zone de contact 72' en contact avec la partie fixe 60 lorsque la porte 56 est en position rabattue.

Ainsi, quel que soit le mode de réalisation, le joint 64 comprend une zone de liaison 80, 80' configurée pour être reliée à la porte 56 ainsi qu'une partie saillante 68 présentant une zone de contact 72, 72' en contact avec la partie fixe 60 lorsque la porte 56 est en position rabattue

Selon une autre caractéristique de l'invention, le joint 64 comprend une âme rigide 86 configurée pour rigidifier la partie saillante 68. Selon un mode de réalisation, l'âme rigide 86 est une lame métallique (ou clinquant) présentant une épaisseur comprise entre 0,2 mm et 1 mm, préférentiellement de l'ordre de 0,3 mm, insérée dans la première partie 70. Selon une configuration, l'âme rigide 86 est noyée dans le joint 64.

Cette âme rigide 86 s'étend au-delà du premier bord 58 de la porte 56 et permet d'augmenter la raideur de la partie saillante 68 du joint 64. Ainsi, le premier bord 58 de la porte 56 peut être plus espacé de la partie fixe 60 par rapport aux solutions de l'art antérieur.

Selon le mode de réalisation visible sur les figures 9 et 10, l'âme rigide 86 est insérée dans la première branche 70 et s'étend sur les première et deuxième portions 80 et 82. L'âme rigide 86 n'est pas présente dans la deuxième branche 71 et dans la troisième portion 84 afin que le joint 64 conserve sa capacité à se déformer pour épouser la géométrie de la parie fixe 60. Selon le mode de réalisation visible sur la figure 15, l'âme rigide 86 est insérée dans la zone de liaison 80' et dans la partie saillante 68.

Quel que soit le mode de réalisation, l'âme rigide 86 est positionnée dans la partie saillante 68. Selon certains modes de réalisation, l'âme rigide 86 peut s'étendre au niveau de la zone de liaison 80, 80'.

Chaque âme rigide 86 comprend un bord amont 88.1 approximativement perpendiculaire à la direction longitudinale ainsi qu'un bord aval 88.2 approximativement parallèle au bord amont 88.1. En fonctionnement, le bord amont 88.1 est orienté vers la partie fixe 60.

Selon une configuration visible sur la figure 13, l'âme rigide 86 comprend une première zone 90.1 qui s'étend à partir du bord amont 88.1, positionnée dans la partie saillante 68 du joint 64 ainsi qu'une deuxième zone 90.2 qui s'étend à partir du bord aval 88.2, positionnée dans la zone de liaison 80, 80' du joint 64. L'âme rigide 86 présente deux lignes de pliage 92, 92', approximativement parallèles aux bords amont et aval 88.1, 88.2, séparant les première et deuxième zones 90.1, 90.2, afin que l'âme rigide 86 suive le profil du joint 64.

Selon un mode de réalisation, le joint 64 est en élastomère et surmoulé sur l'âme rigide 86. Pour la suite de la description, la largeur d'un élément correspond à la dimension de l'élément prise selon la direction longitudinale et la longueur de l'élément correspond à sa dimension prise selon la circonférence.

Selon un mode de réalisation non représenté, les âmes rigides 86 des joints 64 des différentes portes 56 sont toutes identiques.

Selon un autre mode de réalisation visible sur la figure 12, une première âme rigide 86 d'une première porte 56 est différente d'une deuxième âme rigide 86' d'une deuxième porte 56'.

Selon un mode de réalisation, l'âme rigide 86 comprend au moins une caractéristique non constante sur sa longueur. Ainsi, l'âme rigide 86 comprend au moins une première zone 94.1 présentant au moins une caractéristique différente de celle d'une deuxième zone 94.2, les première et deuxième zones 94.1, 94.2 étant décalées selon la longueur. Selon un mode de réalisation, l'âme rigide 86 présente une flexion qui peut varier sur sa longueur.

Selon un mode de réalisation visible sur les figures 12 à 14, une âme rigide 86 comprend au moins une entaille 96 qui s'étend sur une partie de la largeur de l'âme rigide 86. Chaque entaille 96 s'étend selon une direction longitudinale, à partir du bord amont 88.1.

Chaque entaille 96 présente une première dimension D1, D1' prise selon la largeur de l'âme rigide 86 ainsi qu'une deuxième dimension D2, D2' prise selon la longueur de l'âme rigide 86. Deux entailles 96 successives sont séparées par une troisième dimension D3, D3'.

Ainsi, il est possible d'ajuster la flexion de l'âme rigide 86 en faisant varier au moins l'une des première, deuxième et troisième dimensions des entailles 96. Bien entendu, l'invention n'est pas limitée à ce mode de réalisation pour faire varier la flexion de l'âme rigide 86. Ainsi, il est possible d'ajuster la flexion de l'âme rigide 86 en faisant varier au moins l'une des dimensions de l'âme rigide 86, notamment sa largeur La, La', comme illustré sur la figure 14, ou son épaisseur E, comme illustré sur la figure 13.

Le fait de pouvoir ajuster au moins une caractéristique de l'âme rigide 86 sur sa longueur permet de pouvoir ajuster au moins une caractéristique du joint 64, notamment sa souplesse, sur sa longueur.

## Revendications

1. Porte d'inverseur de poussée d'un ensemble propulsif d'aéronef, ladite porte (56) étant mobile entre une position rabattue dans laquelle la porte (56) ne dévie pas un flux d'air et une position déployée dans laquelle la porte (56) dévie un flux d'air, ladite porte (56) présentant une première face (56.1) en contact avec le flux d'air en fonctionnement, une deuxième face (56.2) opposée à la première face (56.1) ainsi qu'un premier bord (58), configuré pour être orienté, en fonctionnement, vers une partie fixe (60) lorsque la porte (56) est en position rabattue, ladite porte (56) comportant un joint (64) positionné au niveau du premier bord (58) présentant une zone de liaison (80, 80') reliée à la porte (56) ainsi qu'une partie saillante (68) décalée vers l'avant par rapport au premier bord (58) lorsque la porte (56) est en position rabattue, la partie saillante (68) prolongeant la première face (56.1) de la porte (56), **caractérisée en ce que** le joint (64) comprend une âme rigide (86) pour rigidifier la partie saillante (68) qui s'étend au-delà du premier bord (58) de la porte (56).

2. Porte d'inverseur de poussée selon la revendication 1, **caractérisée en ce que** l'âme rigide (86) comprend une première zone (90.1) positionnée dans la partie saillante (68) du joint (64) ainsi qu'une deuxième zone (90.2) positionnée dans la zone de liaison (80, 80') du joint (64).

3. Porte d'inverseur de poussée selon la revendication 1 ou 2, **caractérisée en ce que** l'âme rigide (86) présente une longueur ainsi qu'au moins une caractéristique non constante sur sa longueur.

4. Porte d'inverseur de poussée selon la revendication précédente, **caractérisée en ce que** l'âme rigide (86) comprend au moins une entaille (96) qui s'étend à partir d'un bord amont (88.1) de l'âme rigide (86).

5. Porte d'inverseur de poussée selon la revendication précédente, **caractérisée en ce que** les entailles (96) présentent des dimensions qui sont ajustées pour faire varier la caractéristique non constante de l'âme rigide (86).

6. Porte d'inverseur de poussée selon l'une des revendications 3 à 5, **caractérisée en ce que** l'âme rigide (86) présente des dimensions qui sont ajustées pour faire varier la caractéristique non constante de l'âme rigide (86).

7. Porte d'inverseur de poussée selon l'une des revendications précédentes, **caractérisée en ce que** le joint (64) a une section en V avec une pointe (76), ladite section en V étant formée par des première et deuxième branches (70, 71) qui présentent une zone de jonction (74) décalée vers l'amont par rapport au premier bord (58) lorsque la porte (56) est en position rabattue.

8. Porte d'inverseur de poussée selon la revendication précédente, **caractérisée en ce que** la première branche (70) comprend une première portion (80) sensiblement rectiligne plaquée contre la deuxième face (56.2) de la porte (56), une deuxième portion (82) sensiblement rectiligne dans le prolongement de la porte (56) et une troisième portion (84) courbe, intercalée entre la deuxième portion (82) et la pointe (76) de la section en V.

9. Porte d'inverseur de poussée selon la revendication précédente, **caractérisée en ce que** l'âme rigide (86) ne s'étend pas au niveau de la deuxième branche (71) et de la troisième portion (84) courbe de la première branche (70).

10. Porte d'inverseur de poussée selon l'une des revendications 7 à 9, **caractérisée en ce que** la première branche (70) présente un décrochement (78) pour loger une partie de la porte (56) afin qu'une première face (70.1) de la première branche (70) soit dans le prolongement de la première face (56.1) de la porte (56).

11. Porte d'inverseur de poussée selon l'une des revendications précédentes, **caractérisée en ce que** le joint (64) est en élastomère et surmoulé sur l'âme rigide (86).

12. Ensemble propulsif comprenant une porte d'inverseur de poussée selon l'une des revendications précédentes.

## Patentansprüche

1. Schubumkehrklappe einer Antriebseinheit eines Luftfahrzeugs, wobei die Klappe (56) zwischen einer eingefahrenen Stellung, in der die Klappe (56) keinen Luftstrom ablenkt, und einer ausgefahrenen Stellung, in der die Klappe (56) einen Luftstrom ablenkt, bewegbar ist, und wobei die Klappe (56) eine im Betrieb in Kontakt mit dem Luftstrom stehende erste Seite (56.1), eine der ersten Seite (56.1) gegenüberliegende zweite Seite (56.2) und einen ersten Rand (58) aufweist, der so eingerichtet ist, dass er im Betrieb zu einem festen Teil (60) hin ausgerichtet ist, wenn sich die Klappe (56) in der eingefahrenen Stellung befindet, wobei die Klappe (56) eine im Bereich des ersten Rands (58) angeordnete Dichtung (64) umfasst, die einen mit der Klappe (56) verbundenen Verbindungsbereich (80, 80') sowie einen gegenüber dem ersten Rand (58) nach vorne versetzten Vorsprung (68) aufweist, wenn sich die Klappe (56) in der eingefahrenen Stellung befindet, wobei der Vorsprung (68) die erste Seite (56.1) der Klappe (56) verlängert, **dadurch gekennzeichnet, dass** die Dichtung (64) einen starren Kern (86) umfasst, um den Vorsprung (68) zu versteifen, der sich über den ersten Rand (58) der Klappe (56) hinaus erstreckt.

2. Schubumkehrklappe nach Anspruch 1, **dadurch gekennzeichnet, dass** der starre Kern (86) einen im Vorsprung (68) der Dichtung (64) angeordneten ersten Bereich (90.1) und einen im Verbindungsbereich (80, 80') der Dichtung (64) angeordneten zweiten Bereich (90.2) umfasst.

3. Schubumkehrklappe nach Anspruch 1 oder 2, **dadurch gekennzeichnet, dass** der starre Kern (86) eine Länge und wenigstens eine über seine Länge nicht konstante Eigenschaft aufweist.

4. Schubumkehrklappe nach dem vorhergehenden Anspruch, **dadurch gekennzeichnet, dass** der starre Kern (86) wenigstens einen Einzug (96) umfasst, der sich von einen stromaufwärtigen Rand (88.1) des starren Kerns (86) erstreckt.

5. Schubumkehrklappe nach dem vorhergehenden Anspruch, **dadurch gekennzeichnet, dass** die Einzüge (96) Abmessungen aufweisen, die dazu eingerichtet sind, die nicht konstante Eigenschaft des starren Kerns (86) zu variieren.

6. Schubumkehrklappe nach einem der Ansprüche 3 bis 5, **dadurch gekennzeichnet, dass** der starre Kern (86) Abmessungen aufweist, die dazu eingerichtet sind, die nicht konstante Eigenschaft des starren Kerns (86) zu variieren.

7. Schubumkehrklappe nach einem der vorhergehenden Ansprüche, **dadurch gekennzeichnet, dass** die Dichtung (64) einen V-förmigen Bereich mit einer Spitze (76) aufweist, wobei der V-förmige Bereich durch einen ersten und angeordneten einen zweiten Schenkel (70, 71) gebildet ist, die einen Übergangsbereich (74) aufweisen, der gegenüber dem ersten Rand (58) stromaufwärts versetzt ist, wenn sich die Klappe (56) in der eingefahrenen Stellung befindet.

8. Schubumkehrklappe nach dem vorhergehenden Anspruch, **dadurch gekennzeichnet, dass** der erste Schenkel (70) einen im Wesentlichen geradlinigen ersten Abschnitt (80), der gegen die zweite Seite (56.2) der Klappe (56) angesetzt ist, einen zweiten Abschnitt (82), der im Wesentlichen eine geradlinige Verlängerung der Klappe (56) ist, und einem dritten gekrümmten Abschnitt (84) umfasst, der zwischen dem zweiten Abschnitt (82) und der Spitze (76) des V-förmigen Bereichs angeordnet ist.

9. Schubumkehrklappe nach dem vorhergehenden Anspruch, **dadurch gekennzeichnet, dass** sich der starre Kern (86) nicht über den Bereich des zweiten Schenkels (71) und des dritten gekrümmten Abschnitts (84) des ersten Schenkels (70) erstreckt.

10. Schubumkehrklappe nach einem der Ansprüche 7 bis 9, **dadurch gekennzeichnet, dass** der erste Schenkel (70) eine Ausnehmung (78) zur Aufnahme eines Teils der Klappe (56) aufweist, so dass eine erste Stirnseite (70.1) des ersten Schenkels (70) eine Verlängerung der ersten Seite (56.1) der Klappe (56) ist.

11. Schubumkehrklappe nach einem der vorhergehenden Ansprüche, **dadurch gekennzeichnet, dass** die Dichtung (64) aus Elastomer besteht und den starren Kern (86) umformt.

12. Antriebseinheit mit einer Schubumkehrklappe nach einem der vorhergehenden Ansprüche.

## Claims

1. Thrust reverser door for an aircraft propulsion unit, said door (56) being configured to move between a folded-back position in which the door (56) does not deflect a flow of air and a deployed position in which the door (56) deflects a flow of air, said door (56) comprising a first face (56.1) in contact with the flow of air during operation, a second face (56.2) opposite the first face (56.1), and a first edge (58) that is configured to be oriented, during operation, toward a fixed part (60) when the door (56) is in the folded-back position, said door (56) comprising a seal (64) positioned at the first edge (58), having a connection zone (80, 80') connected to the door (56) and a projecting part (68) that is offset in a forward direction with respect to the first edge (58) when the door (56) is in the folded-back position, the projecting part (68) extending the first face (56.1) of the door (56), **characterized in that** the seal (64) comprises a rigid core (86) to stiffen the projecting part (68) that extends beyond the first edge (58) of the door (56).

2. Thrust reverser door according to claim 1, wherein the rigid core (86) comprises a first zone (90.1) positioned in the projecting part (68) of the seal (64) and a second zone (90.2) positioned in the connection zone (80, 80') of the seal (64).

3. Thrust reverser door according to claim 1 or 2, wherein the rigid core (86) has a length and at least one characteristic that is not constant over the length.

4. Thrust reverser door according to the preceding claim, wherein the rigid core (85) comprises at least one notch (96) that extends from an upstream edge (88.1) of the rigid core (86).

5. Thrust reverser door according to the preceding claim, wherein the notches (96) have dimensions that are adjusted so as to vary the non-constant characteristic of the rigid core (86).

6. Thrust reverser door according to the preceding claims 3 to 5, wherein the rigid core (86) has dimensions that are adjusted so as to vary the non-constant characteristic of the rigid core (86).

7. Thrust reverser door according to one of the preceding claims, wherein the seal (64) has a V-shaped cross section with a point (76), said V-shaped cross section comprising first and second branches (70, 71) which have a junction zone (74) that is offset in an upstream direction with respect to the first edge (58) when the door (56) is in the folded-back position.

8. Thrust reverser door according to the preceding claim, wherein the first branch (70) comprises a first portion (80) that is essentially straight and is clamped against the second face (56.2) of the door (56), a second portion (82) that is essentially straight in an extension of the door (56) and a third portion (84) that is curved and is interposed between the second portion (82) and the point (76) of the V-shaped cross section.

9. Thrust reverser door according to the preceding claim, wherein the rigid core (86) does not extend at the second branch (71) and at the third, curved portion (84) of the first branch (70).

10. Thrust reverser door according to one of the preceding claims 7 to 9, wherein the first branch (70) has a setback (78) to accommodate part of the door (56) in order that a first face (70.1) of the first branch (70) is in a continuation of the first face (56.1) of the door (56).

11. Thrust reverser door according to one of the preceding claims, wherein the seal (64) is made of elastomer and is overmolded onto the rigid core (86).

12. Propulsion unit comprising a thrust reverser door according to one of the preceding claims.
